(19)

Europäisches
Patentamt
European
Patent Office
Office européen
des brevets

(11) **EP 4 099 207 A1**

(12) **EUROPEAN PATENT APPLICATION**
published in accordance with Art. 153(4) EPC

(43) Date of publication:
**07.12.2022 Bulletin 2022/49**

(21) Application number: **21923992.8**

(22) Date of filing: **12.04.2021**

(51) International Patent Classification (IPC):
*G06F 30/13* (2020.01)    *G06F 30/23* (2020.01)
*G06F 111/04* (2020.01)    *G06F 119/14* (2020.01)

(86) International application number:
**PCT/CN2021/086371**

(87) International publication number:
**WO 2022/165983 (11.08.2022 Gazette 2022/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.02.2021 CN 202110149659**

(71) Applicant: **China Railway Major Bridge
Reconnaissance &
Design Institute Co., Ltd.
Wuhan, Hubei 430000 (CN)**

(72) Inventors:
• **XIAO, Haizhu**
  **Wuhan, Hubei 430000 (CN)**

• **ZHANG, Jianqiang**
  **Wuhan, Hubei 430000 (CN)**
• **GAO, Zongyu**
  **Wuhan, Hubei 430000 (CN)**
• **BIE, Yeshan**
  **Wuhan, Hubei 430000 (CN)**
• **LI, Songlin**
  **Wuhan, Hubei 430000 (CN)**
• **TANG, Chao**
  **Wuhan, Hubei 430000 (CN)**
• **DAI, Huimin**
  **Wuhan, Hubei 430000 (CN)**
• **HUANG, Yun**
  **Wuhan, Hubei 430000 (CN)**

(74) Representative: **Gille Hrabal
Partnerschaftsgesellschaft mbB
Patentanwälte
Brucknerstraße 20
40593 Düsseldorf (DE)**

(54) **METHOD FOR DETERMINING LONGITUDINAL RESTRAINT STIFFNESS BETWEEN TOWER BEAMS OF THREE-TOWER CABLE-STAYED BRIDGE AND FOR OPTIMIZING FOUNDATION**

(57)    The invention relates to a method for determining the longitudinal constraint stiffness of a tower beam of a three-tower cable-stayed bridge and optimizing foundation. The method comprises the steps of creating a basic model with longitudinal free stretching of a main beam at a side tower as a first boundary condition; acquiring an initial value of longitudinal spring stiffness under a second boundary condition in the basic model by taking the longitudinal spring constraint of the main beam at the side tower as the second boundary condition; respectively determining functional relationship between the longitudinal bending moment and the longitudinal spring stiffness and the functional relationship between the pile bottom counter force of a pile foundation of the side tower and the longitudinal spring stiffness under the main force working condition and the main additional working condition based on the initial value of the longitudinal spring stiffness; and determining an optimal value of the longitudinal spring stiffness and optimizing the foundation scale of the tower bottom of the middle tower. The invention provides a method for determining the optimal value of the longitudinal spring stiffness, and the method is clear in purpose, easy to operate and obvious in effect. The foundation scale is optimized through the optimal value of the longitudinal spring stiffness, the scale of the pile foundation of the middle tower can be effectively reduced, and the building cost can also be reduced.

EP 4 099 207 A1

creating a basic model with longitudinal free stretching of a main beam at a side tower as a first boundary condition ⟿ S10

acquiring an initial value of longitudinal spring stiffness under a second boundary condition in the basic model by taking longitudinal spring constraint of the main beam at the side tower as the second boundary condition ⟿ S20

respectively determining functional relationship between longitudinal bending moment and the longitudinal spring stiffness under a main force working condition and a main additional working condition based on the initial value of the longitudinal spring stiffness ⟿ S30

determining the functional relationship between pile bottom counter force of a pile foundation of the side tower and the longitudinal spring stiffness based on the functional relationship between the longitudinal bending moment and the longitudinal spring stiffness ⟿ S40

determining an optimal value of the longitudinal spring stiffness based on the functional relationship between the pile bottom counter force of the pile foundation of the side tower and the longitudinal spring stiffness ⟿ S50

substituting the optimal value of the longitudinal spring stiffness into the basic model to calculate a pile bottom counter force value of the pile foundation of the middle tower ⟿ S60

if the counter force value of the pile foundation of the middle tower is less than an initial pile bottom counter force value of the pile foundation of the middle tower corresponding to the basic model under the first boundary condition, optimizing the foundation scale of the tower bottom of the middle tower ⟿ S70

Fig. 1

## Description

## Field of the Invention

The present invention relates to the technical field of bridge engineering, in particular to a method for determining the longitudinal constraint stiffness and optimization foundation of a tower beam of a three-tower cable-stayed bridge.

## Background of the Invention

At present, the three-tower cable-stayed bridge can be provided with two navigation holes to meet the requirement of the navigation, and the economy thereof has absolute advantages over the two-tower cable-stayed bridge covering the same navigation area. Therefore, it has strong competitiveness in bridge solution selection. As a three-tower cable-stayed bridge structure, the middle tower is different from the side tower and lacks the constraint effect of the anchor cable at the end of the side span. The deflection of the middle tower is larger than that of the main tower of the two-tower cable-stayed bridge with the same span, so that the mid-span displacement of the main beam is large, the structural stiffness is weak, the tower bottom bending moment of the middle tower also increases greatly, and the structural design difficulty increases, especially for the three-tower cable-stayed bridge with soft foundation. Too large tower bottom bending moment will increase the foundation scale, and then greatly increase the cost of the project.

In order to improve the stiffness of the three-tower cable-stayed bridge structure, in related technologies, some adopt the solution of adding stability cables to limit the lateral deviation of the middle tower, such as Ting Kau Bridge in Hong Kong, but this solution destroys the concise and lively landscape effect of the cable-stayed bridge; in addition, some adopt the solution of increasing the structural size and the longitudinal stiffness of the middle tower to "resist" the load action, such as Erqi Yangtze River Bridge, but this solution increases the tower bottom bending moment of the middle tower, and the structural foundation scale will increase greatly in the case of soft foundation; in addition, some adopt the solution of increasing the longitudinal constraint between towers and beams to reduce the equivalent arm of force of the transmitting horizontal force of the bridge tower, improve the structural stiffness and reduce the longitudinal bending moment of the tower root, this solution can effectively change the force transmission law of the structure through adjusting the constraint system of the structure. However, how to determine the longitudinal constraint stiffness value between tower beams of the three-tower cable-stayed bridge? How to reduce the structural foundation scale to the greatest extent? How to make the longitudinal forces of the side tower and middle tower of the three-tower cable-stayed bridge basically consistent, so as to unify the structural dimensions of the bridge tower, thereby maintaining the consistency and rhythm of the structural landscape? These problems remain to be studied.

It is found that there are the following problems in determining the longitudinal constraint stiffness value between tower beams of the three-tower cable-stayed bridge by means of trial calculation: the trial calculation is time-consuming and laborious, the work efficiency thereof varies from person to person, the determined stiffness value is not necessarily the optimal solution, there is still a large optimization space for the foundation scale of the main tower, and the structural dimensions of the side and middle towers need to be further optimized and unified.

## Summary of the Invention

The embodiment of the present invention provides a method for determining the longitudinal constraint stiffness and optimization foundation of a tower beam of a three-tower cable-stayed bridge. Through calculating the optimal value of the longitudinal spring stiffness, the foundation scale of the tower bottom of the middle tower is optimized and the foundation scale of the tower bottom of the middle tower is optimized to the greatest extent.

The present invention relates to a method for determining the longitudinal constraint stiffness of a tower beam of a three-tower cable-stayed bridge and optimizing foundation, comprising the following steps: creating a basic model with longitudinal free stretching of a main beam at a side tower as a first boundary condition; acquiring an initial value of longitudinal spring stiffness under a second boundary condition in the basic model by taking longitudinal spring constraint of the main beam at the side tower as the second boundary condition; respectively determining functional relationship between longitudinal bending moment and the longitudinal spring stiffness under a main force working condition and a main additional working condition based on the initial value of the longitudinal spring stiffness; determining the functional relationship between pile bottom counter force of a pile foundation of the side tower and the longitudinal spring stiffness based on the functional relationship between the longitudinal bending moment and the longitudinal spring stiffness; determining an optimal value of the longitudinal spring stiffness based on the functional relationship between the pile bottom counter force of the pile foundation of the side tower and the longitudinal spring stiffness; substituting the optimal value of the longitudinal spring stiffness into the basic model to calculate a pile bottom counter force value of the pile foundation of a middle tower; and if the counter force value of the pile foundation of the middle tower is less than an initial pile bottom counter force value of the pile foundation of the middle tower corresponding to the basic model under the first boundary condition, optimizing foundation scale of the tower bottom of the middle tower.

In some embodiments, acquiring the initial value of the longitudinal spring stiffness under the second boundary condition in the basic model by taking the longitudinal spring constraint of the main beam at the side tower as the second boundary condition, comprising the following steps: applying unit horizontal force at a midspan of the main beam, and recording as P; recording the initial value of the longitudinal spring stiffness as $k_0$; and calculating the $k_0$ according to the formula $k_0 = P/(10 * \delta)$, wherein $\delta$ is a displacement of the main beam at a longitudinal fixed constraint of the middle tower.

In some embodiments, respectively determining the functional relationship between the longitudinal bending moment and the longitudinal spring stiffness under the main force working condition and the main additional working condition based on the initial value of the longitudinal spring stiffness, comprising the following steps: substituting different times of the initial value of the longitudinal spring stiffness as parameters into the basic model to obtain calculation results corresponding to different times; and respectively fitting the calculation results under the main force working condition and the main additional working condition to obtain the functional relationship between the corresponding longitudinal bending moment and the longitudinal spring stiffness.

In some embodiments, respectively determining the functional relationship between the longitudinal bending moment and the longitudinal spring stiffness under the main force working condition and the main additional working condition based on the initial value of the longitudinal spring stiffness, comprising determining: the functional relationship between the longitudinal bending moment and the longitudinal spring stiffness at the tower bottom of the side tower under the main force working condition; the functional relationship between the longitudinal bending moment and the longitudinal spring stiffness at the tower bottom of the middle tower under the main force working condition; the functional relationship between the longitudinal bending moment and the longitudinal spring stiffness at the tower bottom of the side tower under the main additional working condition; and the functional relationship between the longitudinal bending moment and the longitudinal spring stiffness at the tower bottom of the middle tower under the main additional working condition.

In some embodiments, determining the functional relationship between pile bottom counter force of the pile foundation of the side tower and the longitudinal spring stiffness based on the functional relationship between the longitudinal bending moment and the longitudinal spring stiffness, comprising determining: the functional relationship between the pile bottom counter force of the pile foundation of the side tower and the longitudinal spring stiffness under the main force working condition; and the functional relationship between the pile bottom counter force of the pile foundation of the side tower and the longitudinal spring stiffness under the main additional working condition.

In some embodiments, determining the optimal value of the longitudinal spring stiffness based on the functional relationship between the pile bottom counter force of the pile foundation of the side tower and the longitudinal spring stiffness, comprising the following steps: determining the optimal value of the longitudinal spring stiffness according to a first formula; the first formula is:

$$\frac{N_{1,\text{main+additional}}(k)}{m2} = \frac{N_{1,\text{main force}}(0)}{m1},$$

wherein k is the longitudinal spring stiffness, $N_{1,\text{mian force}}(0)$ is the value when k is 0 in the functional relationship $N_{1,\text{main force}}(k)$ between the pile bottom counter force of the pile foundation of the side tower and the longitudinal spring stiffness under the main force working condition, $N_{1,\text{main+additional}}(k)$ is the functional relationship between the pile bottom counter force of the pile foundation of the side tower and the longitudinal spring stiffness under the main additional working condition, m1 is improvement coefficient of the main force working condition, and m2 is improvement coefficient of the main additional working condition.

In some embodiments, a section parameter update is performed on the basic model before the optimal value of the longitudinal spring stiffness is substituted into the basic model; the section parameter update comprises the following steps: substituting the optimal value of the longitudinal spring stiffness into the functional relationship between the longitudinal bending moment and the longitudinal spring stiffness to calculate an internal force value of the longitudinal bending moment; adjusting longitudinal dimensions of the sections of the side tower and the middle tower according to the internal force value of the longitudinal bending moment; and entering the adjusted longitudinal dimensions of the sections into the basic model for performing update.

In some embodiments, adjusting the longitudinal dimensions of the sections of the side tower and the middle tower according to the internal force value of the longitudinal bending moment, comprising the following step: adjusting the longitudinal dimensions of the sections of the side tower and the middle tower to the same dimension.

In some embodiments, after optimizing the foundation scale of the tower bottom of the middle tower, the method comprises the following steps: performing update on the basic model based on the optimized foundation scale; calculating the updated pile bottom counter force value of the pile foundation of the middle tower based on the optimal value of the longitudinal spring stiffness and the updated basic model; and if the updated pile bottom counter force value of the pile foundation of the middle tower is less than the initial pile bottom counter force value of the pile foundation of the middle tower corresponding to the basic model under the first boundary condition, continuing to optimize the foundation scale of the tower bottom of the middle tower.

In some embodiments, optimizing the foundation scale of the tower bottom of the middle tower comprises: reducing the number of pile foundations; and reducing the size of a bearing platform.

The technical solution provided by the present invention has the following beneficial effects: the embodiment of the present invention provides a method for determining the longitudinal constraint stiffness of a tower beam of a three-tower cable-stayed bridge and optimizing foundation, wherein a method for determining the optimal value of the longitudinal spring stiffness of the tower beam of the three-tower cable-stayed bridge with clear purpose, easy operation and obvious effect is provided, and the foundation scale is optimized by the optimal value of the longitudinal spring stiffness. The present invention can obtain the optimal solution of the longitudinal constraint stiffness value between the tower beams of the three-tower cable-stayed bridge, and optimize the foundation scale of the main tower to the greatest extent. At the same time, it can unify the appearance and size of the side and middle towers, maintain the consistency of the structural landscape and enhance the sense of rhythm of the structure. It solves the problem of time-consuming and laborious when the longitudinal constraint stiffness value is calculated by means of trial calculation in the prior art, and that there is still a large optimization space for the foundation scale of the main tower because the calculated longitudinal constraint stiffness value cannot be guaranteed to be the optimal solution.

**Brief Description of the Drawings**

In order to better illustrate the technical solution in the embodiments of the present invention, the following will briefly introduce the drawings needed in the description of the embodiments, and it is obvious that the drawings in the following description are only a part of embodiments of the present invention, for those of ordinary skill in the art, other drawings may also be obtained based on these drawings without any inventive efforts.

Fig. 1 is a flow diagram of a method for determining the longitudinal constraint stiffness of a tower beam of a three-tower cable-stayed bridge and optimizing foundation in the embodiment of the present invention;

Fig. 2 is a structural diagram of a three-tower cable-stayed bridge tower in the embodiment of the present invention;

Fig. 3 is a structural diagram of a three-tower cable-stayed bridge tower under the second boundary condition in the embodiment of the present invention;

Fig. 4 is a functional relationship between a longitudinal bending moment and a longitudinal spring stiffness at the tower bottom of a side tower in the embodiment of the present invention;

Fig. 5 is a functional relationship between a longitudinal bending moment and a longitudinal spring stiffness at the tower bottom of a middle tower in the embodiment of the present invention;

Fig. 6 is a schematic diagram of determining an optimal value of a longitudinal spring stiffness based on the first formula in the embodiment of the present invention;

Fig. 7 is a schematic diagram of calculating a pile bottom counter force value of a pile foundation of a middle tower based on an optimal value of a longitudinal spring stiffness in the embodiment of the present invention.

In the Figures: 1-main beam; 2-middle tower; 3-side tower; 4-longitudinal fixed constraint; 5-longitudinal spring constraint; 6-foundation; 7-bearing platform; 8-pile foundation.

**Detailed Description of the Embodiments**

In order to make the purposes, technical solutions and advantages of the embodiments of the present invention clearer, the technical solutions in the embodiments of the present invention will be described clearly and completely in combination with the drawings in the embodiments of the present invention. Obviously, the described embodiments are only a part of the embodiments of the present invention, not all of the embodiments. Based on the embodiments in the present invention, all other embodiments obtained by a person of ordinary skill in the art without inventive efforts shall fall within the protection scope of the present invention.

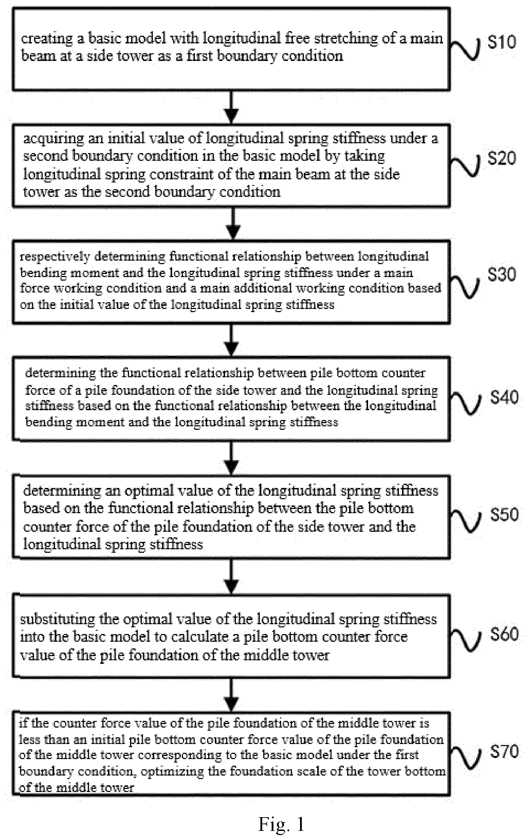

As shown in Fig. 1. the embodiment of the present invention provides a method for determining the longitudinal constraint stiffness of a tower beam of a three-tower cable-stayed bridge and optimizing foundation. Through calculating the optimal value of the longitudinal spring stiffness, the foundation scale of the tower bottom of the middle tower is optimized and the foundation scale of tower bottom of the middle tower is optimized to the greatest extent. Specifically, the method comprises the following steps:

S10: creating a basic model with longitudinal free stretching of a main beam at a side tower as a first boundary condition;

S20: acquiring an initial value of longitudinal spring stiffness under a second boundary condition in the basic model by taking longitudinal spring constraint of the main beam at the side tower as the second boundary condition;

S30: respectively determining functional relationship between longitudinal bending moment and the longitudinal spring stiffness under a main force working condition and a main additional working condition based on the initial value of the longitudinal spring stiffness;

S40: determining the functional relationship between pile bottom counter force of a pile foundation of the side tower and the longitudinal spring stiffness based on the functional relationship between the longitudinal bending moment and the longitudinal spring stiffness;

S50: determining an optimal value of the longitudinal spring stiffness based on the functional relationship between the pile bottom counter force of the pile foundation of the side tower and the longitudinal spring stiffness;

S60: substituting the optimal value of the longitudinal spring stiffness into the basic model to calculate a pile bottom counter force value of the pile foundation of the middle tower; and

S70: if the counter force value of the pile foundation of the middle tower is less than an initial pile bottom counter force value of the pile foundation of the middle tower corresponding to the basic model under the first boundary condition, optimizing the foundation scale of the tower bottom of the middle tower.

It should be noted that the tower foundation of the three-tower cable-stayed bridge tower is pile group foundations at soft foundation, the stress mode of the pile foundation is in the form of friction pile, and the pile foundation types of side tower and middle tower are pile foundations with the same diameter.
It should be noted that the basic model is established in the S10 on the premise that the main beam is longitudinally fixed at the middle tower. The longitudinal free stretching at the side tower can be understood as that the longitudinal constraint stiffness between tower beams at the side tower is 0, that is, k represents the longitudinal restraint stiffness (or the longitudinal spring stiffness mentioned later), then k=0.
The S10 further comprises performing finite element analysis on the established basic model to determine the foundation scale and size of the structure corresponding to the basic model, comprising the longitudinal dimension of the section of the side tower and the middle tower, the dimension of the bearing platform of the side tower and the middle tower, and the number of pile foundations.
It should be noted that in the basic model under the first boundary condition, since the main beam is fixed longitudinally at the middle tower and moves freely longitudinally at the side tower, the longitudinal bending moment at the tower bottom of the side tower is much smaller than that at the tower bottom of the middle tower, so the longitudinal dimension of the main tower of the side tower is smaller than that of the middle tower in design; under the same geological conditions, the pile foundation scale at the tower bottom of the side tower is smaller than that at the tower bottom of the middle tower, that is, the number of pile foundations at the tower bottom of the side tower is smaller than that at the tower bottom of the middle tower, and the structural dimension of the bearing platform at the tower bottom of the side tower is also smaller than that at the tower bottom of the middle tower.
It can be understood that in the S20, in order to calculate the longitudinal constraint stiffness at the side tower, the first boundary condition in the S10 is adjusted from longitudinal free stretching to longitudinal spring constraint. The initial value of the longitudinal spring stiffness can be calculated based on the basic model and the set spring constraint condition.
Preferably, the specific steps of determining the initial value of the longitudinal spring stiffness comprise:

S201: applying unit horizontal force at a midspan of the main beam, and recording as P;

S202: recording the initial value of the longitudinal spring stiffness as $k_0$; and

S203: calculating the $k_0$ according to the formula $k_0 = P/(10*8)$, wherein $\delta$ is a displacement of the main beam at a longitudinal fixed constraint of the middle tower.

It should be noted that in the S30, the main force working condition and main additional working condition respectively correspond to the longitudinal bending moments at the tower bottom under different load conditions. In general, the main force working condition refers to the situation that the live load causes the longitudinal bending moment at the tower bottom, and the main additional working condition refers to the situation that the main force working condition and the additional force working condition act at the same time. The additional force working condition refers to the situation that the additional force causes the longitudinal bending moment at the tower bottom, and the additional force comprises wind load, temperature load and braking force.
It can be understood that the functional relationship in the S30 and S40 can be obtained by numerical fitting in the basic model based on the initial value of the longitudinal spring stiffness and different working conditions.
It can be understood that the functional relationship between the pile bottom counter force of the pile foundation of the side tower and the longitudinal spring stiffness in the S50 is the functional relationship under the main force working condition and the main additional working condition. Based on the graphical data analysis of the functional relationship under two different working conditions, the optimal value of the longitudinal spring stiffness can be determined.

It can be understood that the initial pile bottom counter value of the pile foundation of the middle tower corresponding to the basic model under the first boundary condition in the S70 is the pile bottom counter value of the pile foundation of the middle tower calculated through substituting the boundary condition with the longitudinal constraint stiffness of 0 between the tower beams at the side tower into the basic model. The precondition for optimizing the foundation scale of the tower bottom of the middle tower is that the pile bottom counter force value of the pile foundation of the middle tower is less than the initial pile bottom counter force value of the pile foundation of the middle tower corresponding to the basic model under the first boundary condition.

In this embodiment, the optimal value of the longitudinal spring stiffness of the three-tower cable-stayed bridge tower is determined through establishing the basic model and adjusting the first boundary condition to the second boundary condition. This method has clear purpose, easy operation and obvious effect. The foundation scale is optimized through the optimal value of the longitudinal spring stiffness, which can effectively reduce the scale of the pile foundation of the middle tower, and reduce the cost of building.

In some embodiments, the S30 comprises the following steps:

S301: substituting different times of the initial value of the longitudinal spring stiffness as parameters into the basic model to obtain calculation results corresponding to different times; and

S302: respectively fitting the calculation results under the main force working condition and the main additional working condition to obtain the functional relationship between the corresponding longitudinal bending moment and the longitudinal spring stiffness.

It should be noted that in the S301, the parameter can be expressed as $N k_0$, wherein $N$ is an integer greater than zero and $k_0$ is the initial value of the longitudinal spring stiffness. The parameter may preferably be $\{k_0, 2k_0, 3k_0, 10k_0\}$.

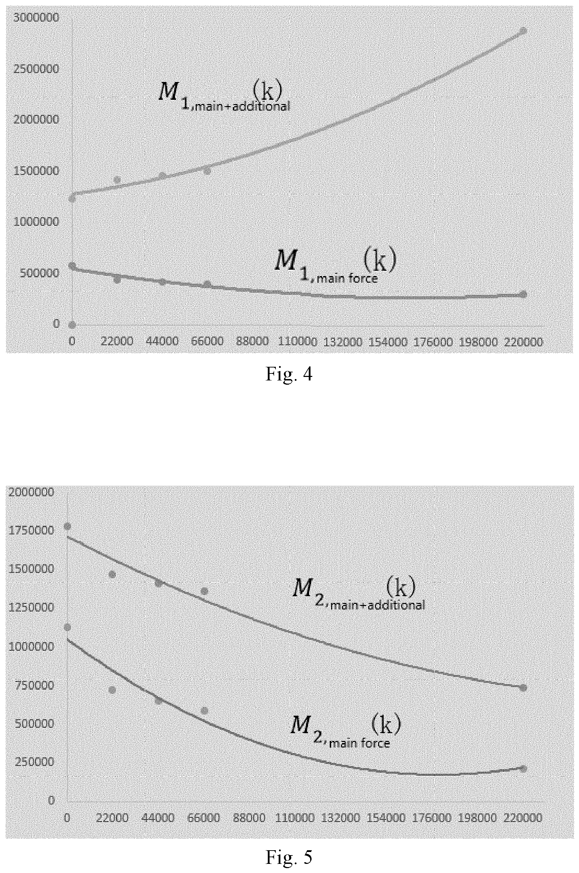

As shown in Fig. 4 and Fig. 5, in some embodiments, the functional relationship in the S30 and S40 comprises:

the functional relationship between the longitudinal bending moment and the longitudinal spring stiffness at the tower bottom of the side tower under the main force working condition, which is recorded as $M_{1,\text{main force}}(k)$;

the functional relationship between the longitudinal bending moment and the longitudinal spring stiffness at the tower bottom of the middle tower under the main force working condition, which is recorded as $M_{2,\text{main force}}(k)$;

the functional relationship between the longitudinal bending moment and the longitudinal spring stiffness at the tower bottom of the side tower under the main additional working condition, which is recorded as $M_{1,\text{main +additional}}(k)$;

the functional relationship between the longitudinal bending moment and the longitudinal spring stiffness at the tower bottom of the middle tower under the main additional working condition, which is recorded as $M_{2,\text{main+additional}}(k)$;

wherein k is the longitudinal spring stiffness.

As shown in Fig. 4 and Fig. 5, the longitudinal bending moment $M_{1,\text{main force}}(k)$ at the tower bottom of the side tower under the main force working condition, the longitudinal bending moments $M_{2,\text{main force}}(k)$ and $M_{2,\text{main+additional}}(k)$ at the tower bottom of the middle tower under the main force working condition and main additional working condition are a decreasing function of the longitudinal spring stiffness k, and the longitudinal bending moment $M_{1,\text{main+additional}}$ at the tower bottom of the side tower under the main additional working condition is an increasing function of the longitudinal spring stiffness k.

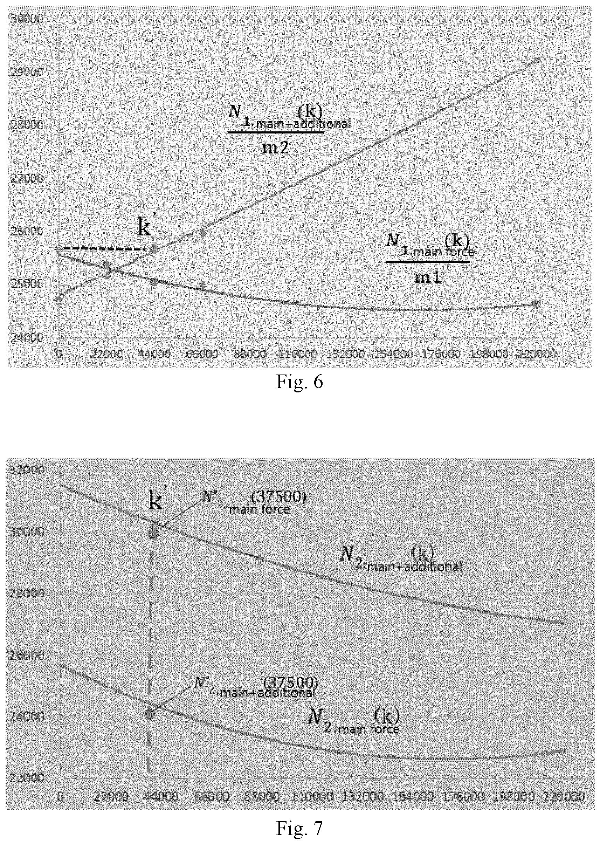

As shown in Fig. 6, in some embodiments, the functional relationship between the pile bottom counter force of the pile foundation of the side tower and the longitudinal spring stiffness in the S50 comprises:

the functional relationship between the pile bottom counter force of the pile foundation of the side tower and the longitudinal spring stiffness under the main force working condition, which is recorded as $N_{1,\text{main force}}(k)$; and

the functional relationship between the pile bottom counter force of the pile foundation of the side tower and the longitudinal spring stiffness under the main additional working condition, which is recorded as $N_{1,\text{main+additional}}(k)$.

As shown in Fig. 6, the pile bottom counter force of the pile foundation of the side tower $N_{1,\text{main force}}(k)$ under the main force working condition is the decreasing function of the longitudinal spring stiffness k, and the pile bottom counter force of the pile foundation of the side tower $N_{1,\text{main+additional}}(k)$ under the main additional working condition is the increasing function of the longitudinal spring stiffness k.

As shown in Fig. 6, in some embodiments, the S50 comprises the following steps: determining the optimal value of the longitudinal spring stiffness according to a first formula; the first formula is:

$$\frac{N_{1,\text{main+additional}}(k)}{m2} = \frac{N_{1,\text{main force}}(0)}{m1},$$

wherein k is the longitudinal spring stiffness, $N_{1,\text{main force}}(0)$ is the value when k is 0 in the functional relationship $N_{1,\text{main force}}(k)$ between the pile bottom counter force of the pile foundation of the side tower and the longitudinal spring stiffness under the main force working condition, $N_{1,\text{main+additional}}(k)$ is the functional relationship between the pile bottom counter force of the pile foundation of the side tower and the longitudinal spring stiffness under the main additional working condition, m1 is the improvement coefficient of the main force working condition, and m2 is the improvement coefficient of the main additional working condition. k in Fig. 5 is the optimal value of the longitudinal spring stiffness. Preferably, the improvement coefficient m1 of the main force working condition is 1, and the improvement coefficient m2 of the main additional working condition is 1.2.

In some embodiments, a section parameter update is performed on the basic model before the optimal value of the longitudinal spring stiffness is substituted into the basic model in the S60. The section parameter update comprises the following steps:

S60a-1: substituting the optimal value of the longitudinal spring stiffness into the functional relationship between the longitudinal bending moment and the longitudinal spring stiffness to calculate an internal force value of the longitudinal bending moment;

S60a-2: adjusting longitudinal dimensions of the sections of the side tower and the middle tower according to the internal force value of the longitudinal bending moment; and

S60a-3: entering the adjusted longitudinal dimensions of the sections into the basic model for performing update.

Preferably, in the S60a-2, the longitudinal dimensions of the sections of the side tower and the middle tower can be adjusted to the same dimension. Specifically, the optimal value k' of the longitudinal spring stiffness is substituted into the corresponding functional relationship, and the longitudinal bending moments at the tower bottom of the side and middle tower under the main additional working condition obtained are basically the same, i.e. $M_{1,\text{main+additional}}(k') \approx M_{2,\text{main+additional}}(k')$, which is characterized in that the longitudinal section dimensions of the side and middle towers are mainly determined by the longitudinal bending moment $M_{i,\text{additonal force}}$ at the tower bottom under the main additional working condition; when i=1, it indicates the side tower; and when i=2, it indicates the middle tower. The side and middle towers have the same shape, the same transverse stress, and the same transverse dimensions of the sections of the side and middle towers. The external dimensions of the side tower 3 and the middle tower 2 can be unified, so that the consistency of structural landscape and sense of rhythm are the strongest. In this embodiment, the basic model is further optimized through updating the section parameters of the basic model, so that the subsequent calculation can be based on the optimized basic model, and the optimization accuracy is improved.

In some embodiments, after the foundation scale of the tower bottom of the middle tower is optimized in the S70, the method further comprises the following steps:

S70b-1: performing update on the basic model based on the optimized foundation scale;

S70b-2: calculating the updated pile bottom counter force value of the pile foundation of the middle tower based on the optimal value of the longitudinal spring stiffness and the updated basic model; and

S70b-3: if the updated pile bottom counter force value of the pile foundation of the middle tower is less than the initial pile bottom counter force value of the pile foundation of the middle tower corresponding to the basic model under the first boundary condition, continuing to optimize the foundation scale of the tower bottom of the middle tower.

It can be understood that when the pile bottom counter force value of the pile foundation of the middle tower is less than the initial pile bottom counter force value of the pile foundation of the middle tower corresponding to the basic model under the first boundary condition, not only the foundation scale of tower bottom of the middle tower is optimized, but also the basic model is adjusted according to the optimized foundation scale to further optimize the basic model. Therefore, the pile bottom counter force value of the pile foundation of the middle tower calculated and obtained each time is based on the updated basic model, which further improves the overall optimization accuracy. After repeated cyclic updating and optimization, the optimization of the foundation scale can be maximized.

If the engineering geological condition of the bottom of the side tower is the same as that of the bottom of the middle tower, the foundation scale of the tower bottom the middle tower can be reduced to the same scale as that of the tower bottom of the side tower when the foundation scale is optimized.

In some embodiments, optimizing the foundation scale of the tower bottom of the middle tower comprises the steps of reducing the number of pile foundations and reducing the size of a bearing platform.

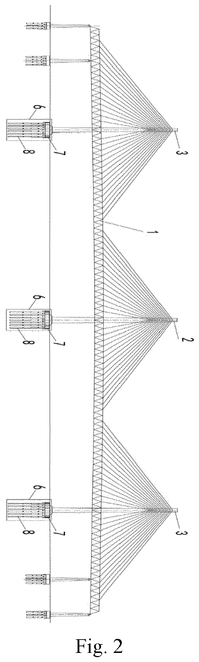

In a specific embodiment, the three-tower cable-stayed bridge tower shown in Fig. 2, is a bridge on soft foundation, and the foundation 6 of the side tower 3 and the middle tower 2 adopts the solution of the bearing platform 7 and pile foundation 8. Due to the stress characteristics of the three-tower cable-stayed bridge structure, the longitudinal dimension of the structure of the middle tower 2 is too large, and the longitudinal dimension from the top to the bottom of the middle tower 2 is 8m to 13m; the longitudinal dimension from the top to the bottom of the side tower 3 is 8m to 10m; and the foundation 6 of the middle tower 2, i.e. bearing platform 7 and pile foundation 8, is significantly larger than that of the side tower 1. The dimension of the bearing platform 7 of the side tower 3 is 71 *36m; and the pile foundation 8 is made of 52 pile foundations with a diameter of 2.5m. The dimension of the bearing platform 7 of the middle tower 2 is 74*39m; and the pile foundation 8 is made of 60 pile foundations with a diameter of 2.5m.

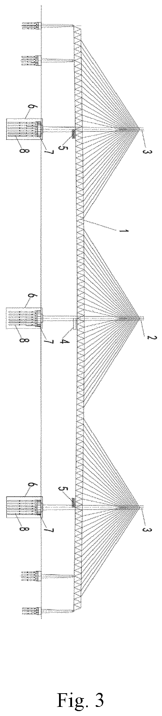

The foundation scale of the tower of the three-tower cable-stayed bridge shown in Fig. 1 is optimized. Firstly, as shown in Fig. 2, the basic model is established based on the boundary conditions that the main beam 1 is provided with the longitudinal fixed constraint 4 at the middle tower 2 and the longitudinal free stretching at the side tower 3 to conduct finite element analysis, and determine the foundation scale and dimension of the structure. At this time, it is equivalent to the longitudinal constraint stiffness k between the tower beams at the side tower 3 is 0. Then, as shown in Fig. 3, the longitudinal constraint condition of the main beam 1 at the side tower 3 in the basic model is adjusted from longitudinal free (k=0) to the longitudinal spring constraint 5 (k>0). In the basic model, the unit horizontal force P applied at the mid-span of main beam 1 is 10000kN, so that the obtained displacement $\delta$ of the main beam at the longitudinal fixed constraint of the middle tower is 0.0454m, the initial value of the stiffness of the longitudinal spring constraint 5 is proposed to be $k_0$=P/(10 * $\delta$) = 22026k$N$/m. In the calculation model, different values of the longitudinal spring stiffness at the side tower are substituted into the calculation, k={22026, 44052, 66078, 220264}. Then, the calculated results are fitted by means of a numerical method, the functional relationships between the longitudinal bending moment and the longitudinal spring stiffness k at the tower bottom of the side tower 3 are respectively fitted under the main force working condition and main additional working condition, respectively recorded as $M_{1,\text{main force}}(k)$和$M_{1,\text{main+addtional}}(k)$, as shown in Fig. 4; and the functional relationships between the longitudinal bending moment and the longitudinal spring stiffness k at the tower bottom of the middle tower 2 are respectively fitted under the main force working condition and main additional working condition, respectively recorded as $M_{2,\text{mian force}}(k)$ and $M_{2,\text{main+additional}}(k)$, as shown in Fig. 5. Then, according to the longitudinal bending moments $M_{1,\text{mian force}}(k)$ and $M_{1,\text{main+additional}}(k)$

at the tower bottom of the corresponding side tower 3, the functional relationships $N_{1,\text{main force}}(k)$ and $N_{1,\text{main+additional}}(k)$ between the pile bottom counter force of the pile foundation 8 at side tower 3 and the longitudinal spring stiffness k are obtained. It is defined that the improvement coefficient m1 of the main force working condition is 1 and the improvement coefficient m2 of the main additional working condition is 1.2, according to the functional relationships $\dfrac{N_{1,\text{main force}}(k)}{m1}$ and $\dfrac{N_{1,\text{main+additional}}(k)}{m2}$, the graphical data analysis are performed, as shown in Fig. 6, and the optimal value of the longitudinal spring stiffness k' is obtained as 37500, and k' meets the equation of $\dfrac{N_{1,\text{main+additional}}(k')}{m2} = \dfrac{N_{1,\text{main force}}(0)}{m1}$.

Further, the optimal value k' of the longitudinal spring stiffness is substituted into the corresponding functional relationship to obtain the longitudinal bending moments $M_{1,\text{main force}}(37500)$ and $M_{1,\text{main+additonal}}(37500)$ at the tower bottom of the side tower and the longitudinal bending moments $M_{2,\text{main force}}(37500)$ and $M_{2,\text{main+additonal}}(37500)$ at the tower bottom of the middle tower. According to the obtained longitudinal bending moment internal force value, the corresponding longitudinal dimensions of the sections of the side tower 3 and the middle tower 2 are adjusted, and preferably the longitudinal dimensions of the sections of the side tower 3 and the middle tower 2 are adjusted to the same size (dimension), that is, the longitudinal dimension from tower top to tower bottom is unified as 8m to 11.5m. Then, the basic model is updated according to the adjusted sections of the side tower 3 and the middle tower 2, and the longitudinal boundary condition at the tower beam is set as that the longitudinal spring stiffness k' at side tower 3 is 37500. The main beam 1 at the middle tower 2 is provided with the longitudinal fixed constraint 4. The optimized longitudinal bending moment at the tower bottom of the middle tower is calculated by means of finite element analysis, which are recorded as $M'_{2,\text{main force}}(37500)$ and $M'_{2,\text{mian+additional}}(37500)$. The pile bottom counter forces of the pile foundation at the middle tower are further obtained, which are recorded as $N'_{2,\text{main force}}(37500)$ and $N'_{2,\text{main+additional}}(37500)$. At this time, the calculated pile bottom counter forces $N'_{2,\text{main force}}(37500)$ and $N'_{2,\text{mian+additional}}(37500)$ are less than the pile bottom counter forces $N_{2,\text{main force}}(0)$ and $N_{2,\text{main+additional}}(0)$ designed in the original basic model, as shown in Fig. 7. Therefore, the foundation scale of the pile foundation can be optimized, comprising reducing the number of the pile foundations and the dimension of the bearing platform. Then the basic model is updated according to the optimized foundation scale, and the longitudinal boundary condition at the tower beam is set again as that the longitudinal spring stiffness k' at the side tower 3 is 37500, and the main beam 1 at the middle tower 2 is provided with longitudinal fixed constraints 4. The new pile bottom counter force of the pile foundation at the middle tower are calculated by means of finite element analysis, if it is still less than the pile bottom counter forces $N_{2,\text{main force}}(0)$ and $N_{2,\text{main+additional}}(0)$ designed in the original basic model, the foundation scale will be continued to optimize. The optimization will not be stopped until the newly calculated pile bottom counter force of the pile foundation at the middle tower is equal to the pile bottom counter forces $N_{2,\text{main force}}(0)$ and $N_{2,\text{main+additional}}(0)$ designed in the original basic model. In this way, the minimum dimension of the bearing platform and the minimum number of the pile foundations can be obtained in a virtuous cycle.

In this embodiment, the engineering geological condition of the bottom of the side tower 3 is the same as the bottom of the middle tower 2, so when the foundation scale is optimized, the scale of the pile foundation 8 at the tower bottom of middle tower 2 can be reduced to the same scale as that of the pile foundation 8 at the tower bottom of the side tower 3, that is, the number of piles remains the same, and both of which adopt 52 pile foundations with a diameter of 2.5. The dimension of the bearing platform is also the same, both are 71*36m. According to the comparison of the calculation result data of the finite element model, the method for determining the longitudinal constraint stiffness of the tower beam of the three-tower cable-stayed bridge and the optimizing foundation is adopted by the present invention, which can reduce the longitudinal bending moment at the tower bottom of the middle tower 2 by 21% and the foundation scale by 17% without increasing the foundation scale of the side tower 3, which can be seen that the solution of the present invention can optimally reduce the longitudinal bending moment of the tower root and reduce the design difficulty and scale of the bridge tower and the bridge tower foundation 6.

This embodiment provides a method for determining the longitudinal constraint stiffness of a three-tower cable-stayed bridge and optimizing foundation with clear purpose, easy operation and obvious effect, obtains the optimal solution of the longitudinal spring stiffness value, and optimizes the foundation 6 scale of the middle tower 2 with the maximum degree on the basis of controlling the minimum scale of the foundation 6 of the side tower 3. In addition, the external dimensions of the side tower 3 and the middle tower 2 are unified, and the consistency of structural landscape and sense of rhythm are the strongest.

In the description of the present invention, it should be noted that the orientation or positional relationship indicated by the terms "upper", "lower", etc. are based on the orientation or positional relationship shown in the drawings, which is only for the convenience of describing the present invention and simplifying the description, instead of indicating or implying that the pointed device or element must have a specific orientation, be configured and operated in a specific orientation, therefore it may not be understood as a limitation of the present invention. Unless otherwise clearly specified and limited, the terms "installation", "connected" and "connection" should be understood in a broad sense. For example, it may be a fixed connection, a detachable connection, or an integral connection; further may be a mechanical connection, or an electrical connection; further may be directly connected, or indirectly connected through an intermediate medium, or may be the internal communication between two components. For those of ordinary skill in the art, the specific meanings of the above-mentioned terms in the present utility model may be understood according to specific circumstances. further can be a mechanical connection, or an electrical connection; further can be directly connected, or indirectly connected through an intermediate medium, or can be the internal communication between two components. For those of ordinary skill in the art, the specific meanings of the above-mentioned terms in the present invention may be understood according to specific circumstances.

It should be noted that relational terms such as "first" and "second" are only for distinguishing one entity or operation from another entity or operation in the present invention, and do not necessarily require or imply any such actual relationship or order between these entities or operations. Moreover, the terms "include", "comprise" or any other variants thereof are intended to cover non-exclusive inclusion, so that a process, method, article or device comprising a series of elements not only comprises those elements, but also comprises those that are not explicitly listed, or further comprises elements inherent to the process, method, article, or device. If there are no more restrictions, the elements defined by the sentence "comprising a..." does not exclude the existence of other same elements in the process, method, article, or device comprising the elements. If there are no more restrictions, the elements defined by the sentence "comprising a..." does not exclude the existence of other same elements in the process, method, article, or device comprising the elements. If there are no more restrictions, the elements defined by the sentence "comprising a..." does not exclude the existence of other same elements in the process, method, article, or device comprising the elements.

The above-mentioned are only the embodiments of the present invention, so that those skilled in the art may understand or implement the present invention. For those skilled in the art, various modifications to these embodiments will be obvious, and the general principles defined herein may be implemented in other embodiments without departing from the spirit or scope of the present invention. Therefore, the present invention will not be limited to the embodiments shown in this document, but will be subject to the widest scope consistent with the principles and novel features applied herein.

## Claims

1. Method for determining the longitudinal constraint stiffness of a tower beam of a three-tower cable-stayed bridge and optimizing foundation, comprising the following steps:

   creating a basic model with longitudinal free stretching of a main beam at a side tower as a first boundary condition;
   acquiring an initial value of longitudinal spring stiffness under a second boundary condition in the basic model by taking longitudinal spring constraint of the main beam at the side tower as the second boundary condition;
   respectively determining functional relationship between longitudinal bending moment and the longitudinal spring stiffness under a main force working condition and a main additional working condition based on the initial value of the longitudinal spring stiffness;
   determining the functional relationship between pile bottom counter force of a pile foundation of the side tower and the longitudinal spring stiffness based on the functional relationship between the longitudinal bending moment and the longitudinal spring stiffness;
   determining an optimal value of the longitudinal spring stiffness based on the functional relationship between the pile bottom counter force of the pile foundation of the side tower and the longitudinal spring stiffness;
   substituting the optimal value of the longitudinal spring stiffness into the basic model to calculate a pile bottom counter force value of the pile foundation of a middle tower; and
   if the counter force value of the pile foundation of the middle tower is less than an initial pile bottom counter force value of the pile foundation of the middle tower corresponding to the basic model under the first boundary condition, optimizing foundation scale of the tower bottom of the middle tower.

2. Method for determining the longitudinal constraint stiffness of the tower beam of the three-tower cable-stayed bridge and optimizing foundation according to claim 1, wherein acquiring the initial value of the longitudinal spring stiffness under the second boundary condition in the basic model by taking the longitudinal spring constraint of the main beam at the side tower as the second boundary condition, comprising the following steps:

   applying unit horizontal force at a midspan of the main beam, and recording as P;
   recording the initial value of the longitudinal spring stiffness as $k_0$; and

   calculating the $k_0$ according to the formula $k_0 = P/(10*\delta)$, wherein $\delta$ is a displacement of the main beam at a longitudinal fixed constraint of the middle tower.

3. Method for determining the longitudinal constraint stiffness of the tower beam of the three-tower cable-stayed bridge and optimizing foundation according to claim 1, wherein respectively determining the functional relationship between the longitudinal bending moment and the longitudinal spring stiffness under the main force working condition and the main additional working condition based on the initial value of the longitudinal spring stiffness, comprising the following steps:

   substituting different times of the initial value of the longitudinal spring stiffness as parameters into the basic model to obtain calculation results corresponding to different times; and
   respectively fitting the calculation results under the main force working condition and the main additional working condition to obtain the functional relationships between the corresponding longitudinal bending moment and the longitudinal spring stiffness.

4. Method for determining the longitudinal constraint stiffness of the tower beam of the three-tower cable-stayed bridge and optimizing foundation according to claim 1, wherein respectively determining the functional relationship between the longitudinal bending moment and the longitudinal spring stiffness under the main force working condition and the main additional working condition based on the initial value of the longitudinal spring stiffness, comprising determining:

   the functional relationship between the longitudinal bending moment and the longitudinal spring stiffness at the tower bottom of the side tower under the main force working condition;
   the functional relationship between the longitudinal bending moment and the longitudinal spring stiffness at the tower bottom of the middle tower under the main force working condition;
   the functional relationship between the longitudinal bending moment and the longitudinal spring stiffness at the tower bottom of the side tower under the main additional working condition; and
   the functional relationship between the longitudinal bending moment and the longitudinal spring stiffness at the tower bottom of the middle tower under the main additional working condition.

5. Method for determining the longitudinal constraint stiffness of the tower beam of the three-tower cable-stayed bridge and optimizing foundation according to claim 1, wherein determining the functional relationship between pile bottom counter force of the pile foundation of the side tower and the longitudinal spring stiffness based on the functional relationship between the longitudinal bending moment and the longitudinal spring stiffness, comprising determining:

the functional relationship between the pile bottom counter force of the pile foundation of the side tower and the longitudinal spring stiffness under the main force working condition; and

the functional relationship between the pile bottom counter force of the pile foundation of the side tower and the longitudinal spring stiffness under the main additional working condition.

6. Method for determining the longitudinal constraint stiffness of the tower beam of the three-tower cable-stayed bridge and optimizing foundation according to claim 5, wherein determining the optimal value of the longitudinal spring stiffness based on the functional relationship between the pile bottom counter force of the pile foundation of the side tower and the longitudinal spring stiffness, comprising the following steps:

determining the optimal value of the longitudinal spring stiffness according to a first formula;
the first formula is:

$$\frac{N_{1,\text{main+additional}}(k)}{m2} = \frac{N_{1,\text{main force}}(0)}{m1},$$

wherein k is the longitudinal spring stiffness, $N_{1,\text{mian force}}(0)$ is the value when k is 0 in the functional relationship $N_{1,\text{main force}}(k)$ between the pile bottom counter force of the pile foundation of the side tower and the longitudinal spring stiffness under the main force working condition, $N_{1,\text{main+additional}}(k)$ is the functional relationship between the pile bottom counter force of the pile foundation of the side tower and the longitudinal spring stiffness under the main additional working condition, m1 is improvement coefficient of the main force working condition, and m2 is improvement coefficient of the main additional working condition.

7. Method for determining the longitudinal constraint stiffness of the tower beam of the three-tower cable-stayed bridge and optimizing foundation according to claim 1, wherein a section parameter update is performed on the basic model before the optimal value of the longitudinal spring stiffness is substituted into the basic model;
the section parameter update comprises the following steps:

substituting the optimal value of the longitudinal spring stiffness into the functional relationship between the longitudinal bending moment and the longitudinal spring stiffness to calculate an internal force value of the longitudinal bending moment;
adjusting longitudinal dimensions of the sections of the side tower and the middle tower according to the internal force value of the longitudinal bending moment; and
entering the adjusted longitudinal dimensions of the sections into the basic model for performing update.

8. Method for determining the longitudinal constraint stiffness of the tower beam of the three-tower cable-stayed bridge and optimizing foundation according to claim 7, wherein
adjusting the longitudinal dimensions of the sections of the side tower and the middle tower according to the internal force value of the longitudinal bending moment, comprising the following step:
adjusting the longitudinal dimensions of the sections of the side tower and the middle tower to the same dimension.

9. Method for determining the longitudinal constraint stiffness of the tower beam of the three-tower cable-stayed bridge and optimizing foundation according to claim 1, wherein after optimizing the foundation scale of the tower bottom of the middle tower, the method comprises the following steps:

performing update on the basic model based on the optimized foundation scale;
calculating the updated pile bottom counter force value of the pile foundation of the middle tower based on the optimal value of the longitudinal spring stiffness and the updated basic model; and
if the updated pile bottom counter force value of the pile foundation of the middle tower is less than the initial pile bottom counter force value of the pile foundation of the middle tower corresponding to the basic model under the first boundary condition, continuing to optimize the foundation scale of the tower bottom of the middle tower.

10. Method for determining the longitudinal constraint stiffness of the tower beam of the three-tower cable-stayed bridge and optimizing foundation according to claim 1, wherein optimizing the foundation scale of the tower bottom of the middle tower comprises:

reducing the number of pile foundations; and

reducing the size of a bearing platform.

creating a basic model with longitudinal free stretching of a main beam at a side tower as a first boundary condition — S10

acquiring an initial value of longitudinal spring stiffness under a second boundary condition in the basic model by taking longitudinal spring constraint of the main beam at the side tower as the second boundary condition — S20

respectively determining functional relationship between longitudinal bending moment and the longitudinal spring stiffness under a main force working condition and a main additional working condition based on the initial value of the longitudinal spring stiffness — S30

determining the functional relationship between pile bottom counter force of a pile foundation of the side tower and the longitudinal spring stiffness based on the functional relationship between the longitudinal bending moment and the longitudinal spring stiffness — S40

determining an optimal value of the longitudinal spring stiffness based on the functional relationship between the pile bottom counter force of the pile foundation of the side tower and the longitudinal spring stiffness — S50

substituting the optimal value of the longitudinal spring stiffness into the basic model to calculate a pile bottom counter force value of the pile foundation of the middle tower — S60

if the counter force value of the pile foundation of the middle tower is less than an initial pile bottom counter force value of the pile foundation of the middle tower corresponding to the basic model under the first boundary condition, optimizing the foundation scale of the tower bottom of the middle tower — S70

Fig. 1

Fig. 2

Fig. 3

Fig. 4

Fig. 5

Fig. 6

Fig. 7

## INTERNATIONAL SEARCH REPORT

| International application No. |
| --- |
| **PCT/CN2021/086371** |

**A.    CLASSIFICATION OF SUBJECT MATTER**

G06F 30/13(2020.01)i;  G06F 30/23(2020.01)i;  G06F 111/04(2020.01)i;  G06F 119/14(2020.01)i

According to International Patent Classification (IPC) or to both national classification and IPC

**B.    FIELDS SEARCHED**

Minimum documentation searched (classification system followed by classification symbols)

G06F,E01D

Documentation searched other than minimum documentation to the extent that such documents are included in the fields searched

Electronic data base consulted during the international search (name of data base and, where practicable, search terms used)

CNABS; CNKI; VEN: 三塔, 多塔, 斜拉桥, 纵向约束, 优化, 桩基, 承台, 边界条件, 刚度, three-tower, cable, bridge, longitudinal, rigidity, optimi+, foundation, boundary condition

**C.    DOCUMENTS CONSIDERED TO BE RELEVANT**

| Category* | Citation of document, with indication, where appropriate, of the relevant passages | Relevant to claim No. |
| --- | --- | --- |
| A | CN 103410083 A (SOUTHEAST UNIVERSITY) 27 November 2013 (2013-11-27)<br>    entire document | 1-10 |
| A | CN 103696356 A (CCCC HIGHWAY CONSULTANTS CO., LTD.) 02 April 2014 (2014-04-02)<br>    entire document | 1-10 |
| A | CN 103966942 A (CCCC HIGHWAY CONSULTANTS CO., LTD.; LONG HIGHWAY BRIDGE CONSTRUCTION CCCC NATIONAL ENGINEERING RESEARCH CENTER CO., LTD.) 06 August 2014 (2014-08-06)<br>    entire document | 1-10 |
| A | CN 108301310 A (CHINA RAILWAY MAJOR BRIDGE RECONNAISSANCE & DESIGN INSTITUTE CO., LTD.) 20 July 2018 (2018-07-20)<br>    entire document | 1-10 |
| A | CN 104594180 A (CCCC HIGHWAY BRIDGES NATIONAL ENGINEERING RESEARCH CENTER CO., LTD.) 06 May 2015 (2015-05-06)<br>    entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 October 2021** | **03 November 2021** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/086371**

| Patent document cited in search report | | | Publication date (day/month/year) | Patent family member(s) | | | Publication date (day/month/year) |
|---|---|---|---|---|---|---|---|
| CN | 103410083 | A | 27 November 2013 | CN | 103410083 | B | 01 July 2015 |
| CN | 103696356 | A | 02 April 2014 | None | | | |
| CN | 103966942 | A | 06 August 2014 | CN | 103966942 | B | 02 March 2016 |
| CN | 108301310 | A | 20 July 2018 | None | | | |
| CN | 104594180 | A | 06 May 2015 | CN | 104594180 | B | 13 April 2016 |

Form PCT/ISA/210 (patent family annex) (January 2015)